# EUROPEAN PATENT APPLICATION

(11) **EP 2 800 338 A1**
(43) Date of publication of application: **05.11.2014**
(21) Application number: 14275099.1
(22) Date of filing: 02.05.2014
(51) Int. Cl.: H04L 29/06, H04W 12/06, H04W 88/08

(54) **Access control**

(30) Priority: 03.05.2013 GB 201307995
(71) Applicant: Vodafone IP Licensing Limited, The Connection Newbury Berkshire RG14 2FN (GB)
(72) Inventor: Hardy, Graeme, London, W2 6BY (GB); Bird, Andrew, London, W2 6BY (GB); Vizor, Matthew, London, W2 6BY (GB); Wakeman, Matthew, London, W2 6BY (GB)
(74) Representative: Boult Wade Tennant

(57) **Abstract**

An access point (11) for enabling a user device to access a data network, the access point (11) being operable to wirelessly communicate with the user device and for providing data network access for the device (10) when authenticated, wherein the access point (11) includes authentication means (64) and processing means (48) for providing an authentication code for transmission to the user device (10) to enable the user device (10) to be authenticated for a communication session with the access point by the authentication means.

## Description

### TECHNICAL FIELD

The present invention relates to an access point for enabling a user device to access a data network, the access point being operable to wirelessly communicate with the user device and for providing data network access for the device when authenticated. The invention also relates to a system incorporating such an access point and a method of operating such an access point.

Additionally, the present invention relates to an access point for enabling a user device to access a data network, including means operable to wirelessly communicate with the user device by a first communication type and means operable to communicate with the data network by a second communication type.

### BACKGROUND TO THE INVENTION

Internet connectivity has become an expectation of customers in many businesses that are public facing. Providing such access can be a financial risk to the business because ultimately the traffic generated over the back haul has to be funded in some manner.

In addition it is increasingly necessary to provide traceability of a customer's on-line activities. It is important to control each customer's use of the service so that, for example:
- overuse of a free service can be prevented;
- a session based service can be resold;
- business metrics can be generated; and
- a customer's activities can be located to a specific device.

Services are typically run by a third party service provider company, separate from the business where the wireless access point (hotspot) is deployed. This introduces additional cost and latency in access point management; it also means business metrics generated from the access point use are available to a third party.

### SUMMARY OF THE INVENTION

In one aspect, the present invention provides an access point for enabling a user device to access a data network (e.g. Internet), the access point being operable to wirelessly communicate with the user device and for providing data network access for the device when authenticated, wherein the access point includes authentication means, and processing means for providing an authentication code for transmission to the user device to enable the user device to be authenticated for a communication session with the access point by the authentication means.

The authentication means and processing means are preferably co-located with other elements of the access point. The access point may be a single (unitary) module, including the authentication means and the processing means.

The access point may include (e.g. within its casing) a microprocessor which performs the functions of the processing means and/or the authentication means.

The functions of the processing means and/or the authentication means may be performed by an application that is hosted by, installed on, and/or run on the access point.

In another aspect, the present invention provides an access point for enabling a user device to access a data network, including means operable to wirelessly communicate with the user device by a first communication type; means operable to communicate with the data network by a second communication type; and interface means operable to detect the physical/mechanical coupling of an administrator entity therewith and to only allow the administrator entity to communicate with the access point when the physical/mechanical coupling is detected. The coupling may be by a cable. The first and second communication types may be the same types, or different types.

The access point may communicate with the user device over a non-cellular air interface (e.g., Wi-Fi).

The access point may be connected to the data network by a fixed or wireless link. The wireless link may be via a cellular telecommunications network, such as a 3G or 4G network.

The access point may include interruption means for determining when the authentication code expires and for interrupting the data network access in dependence thereon.

The authentication code may be provided to the user device by a printed medium or sent by a wireless communication method, such as SMS or text message sent via a 3G or 4G cellular network.

The processing means may generate an authentication code of a first type to authenticate the mobile device with the access point for a predetermined number of times, for example only once. The authentication code may be provided to the device user as a time-limited or data-volume limited "voucher". When the time and/or data limit is reached, the interruption means may stop data access for that authentication code.

The processing means may be operable to set an authentication code of a second type usable to authenticate the mobile device with the access point until a predetermined time. The authentication code may be made publicly available as a "static" code, usable to authenticate multiple devices. When the code expires, the interruption means may stop data access for that authentication code.

The access point may include means for monitoring the data network access of the user device that is associated with the authentication code. For example, web sites visited may be recorded.

The access point may include means for receiving a parameter relating to an authentication code and for adjusting a characteristic of the communication session associated with the authentication code. The parameter may be the time or data limit of an authentication code.

The processing means may be operable to monitor the use of the authentication codes and for generating alerts in dependence thereon. For example, for the first type of authentication codes, the processing means may determine when the generated authentication codes are used by devices, and may generate an alert when the number of unused codes falls below a threshold.

An administration entity may be provided.

The access point may include interface means operable to detect a physical/mechanical coupling of the administration entity therewith and to only allow the administration entity to communicate with the processing means when the physical coupling is detected.

The administration entity may generate the parameter. The administration entity may instruct the processing means to generate authentication codes of the first type or of the second type. The administration entity may receive the alerts. The administration entity may be a PC which is operated by the owner or manager of the business or premises where the access point is located.

The administration entity may be physically/mechanically coupled to the access point by a cable, such as a USB or Ethernet cable. This enhances security. However, the access point may also communicate with the administration means indirectly - for example via the Internet, by email or by SMS. The access point may also communicate with the administration entity wirelessly.

In a another aspect of the invention provides a system including the access point and administrator means operable to be coupled to the access point to control generation of the authentication codes and/or a characteristic of the communication session associated with the authentication code. The access point and the administrator means are configured for physical coupling, the access point being operable to detect the physical coupling. This enhances security. The administrator means may be the administration entity mentioned above.

The present invention also provides a method as defined in the claims.

The embodiments of the invention, to be described may provide the following features:
- Device authentication method: authentication of a remote user device for accessing a data network via an access point (e.g., Wi-Fi hotspot) using an authentication code (e.g., a voucher) generated by the access point. The authentication code may be associated with one data session. The authentication code might expire after one session (e.g., dynamic voucher) or might be reused for different sessions (e.g. static voucher). The parameters associated with a data session are dynamically adjustable by an entity (e.g., authorised administrator means/administration entity) that manages the access point. The access point may communicate with the remote user device over a non-cellular air interface (e.g., Wi-Fi). In addition, the access point might communicate with the data network over a cellular air interface (e.g., 2G, 3G or 4G).
- Data session monitoring method: monitoring data session activity of a remote user device over a data network accessed by the user via an access point (e.g., Wi-Fi hotspot) using an authentication code (e.g., a voucher) generated by the access point. The monitored data session activity is accessible by an entity that manages the access point - such as the administrator means/administration entity.
- Controlled administration access: controlling access to an administrator interface of an access point (e.g., Wi-Fi hotspot), wherein access is granted only when the access point is physically connected (e.g., via cable) to a device associated with an entity that manages the access point - such as the administrator means/administration entity.
- Setting voucher generation: controlling a process for generating authentications codes, wherein the authentication codes are generated by an access point, by setting parameters (e.g., number, duration, data traffic) associated with the process. The setting is restricted to an entity (e.g., authorised administrator means/administration entity) that manages the access point. The setting can be done by using a manager interface or by messaging exchanged between the access point and the entity that manages (e.g., authorised administrator means/administration entity) the access point. The setting may be done automatically by the access point after an initial set-up of the device.
- Improved access point: an access point capable of communicating (i) with a remote user device over a first air interface (e.g., Wi-Fi); (ii) with a data network over a second air interface (e.g., 2G, 3G or 4G); and (iii) with a managing device (administrator means/administration entity) over a physical connection (e.g., a cable). The physical connection acts as a means for authenticating the managing device. The managing device may be only capable of being authenticated when the physical connection is operative. The access point is arranged to provide to the remote user device a connection over the data network in response to the remote user device being authenticated using an authentication code (e.g., voucher) generated by the access point. The set-up of the access point, as well as to the parameters associated with the connection (e.g., voucher generation), is performed by the managing device (administrator means/administration entity).
- Management of vouchers: Monitoring a parameter (e.g., the number of vouchers used) associated with a process for generating authentications codes, wherein the authentication codes are generated by an access point, by determining whether the parameter is outside a boundary (e.g., threshold) set up by an entity that manages the access point (administrator means/administration entity). The entity might be alerted by way of a message. Alternatively, the access point may automatically generate additional authentication codes.
- Transmission of vouchers: vouchers may be transmitted by any suitable mechanism. They may be provided to users on printed media, such as a paper receipt. They may be displayed at the business premises where the access point is located. They may be sent to users by email, SMS or instant message over any suitable link, such as Bluetooth, qcode image, NFC, or by verbal communication.

### BRIEF DESCRIPTION OF THE DRAWINGS

For a better understanding of the present invention, embodiments will now be described by way of example, with reference to the accompanying drawings, in which:
Figure 1 shows elements of a telecommunications network including a 3G cellular network;
Figure 2 shows the elements of a telecommunications network including a 4G cellular network;
Figure 3 shows an access point in accordance with an embodiment in the invention which communicates the user devices to provide data network/Internet access;
Figure 4 shows the access point in more detail;
Figures 5A and 5B are a flow chart which shows the steps performed when a device wishes to access the Internet by entering an access code in accordance with a static mode of operation;
Figure 6 is a flowchart which shows the steps performed to determine when a data session has expired;
Figure 7 shows the "landing page" that a user is redirected to when initially accessing the access point;
Figure 8 shows a page displayed to a user, indicating the duration and data quantity used in a communication session with the access point;
Figure 9 shows the administration user interface presented to an administrator for the access point, to allow the administrator to activate the voucher mode and allow the use of super-user vouchers;
Figure 10 shows the administration user interface for performing branding of the user pages presented by the access point to the users;
Figure 11 shows an example of the administration user interface for selecting default branding via the administration user interface;
Figures 12 and 13 show the administration user interface for setting of criteria by the administration user interface, as does Figure 13; and
Figure 14 shows the administration user interface showing the usage status of vouchers generated by the access point.

In the Figures like elements/steps are generally designated with the same reference sign.

### DETAILED DESCRIPTION OF EMBODIMENTS OF THE INVENTION

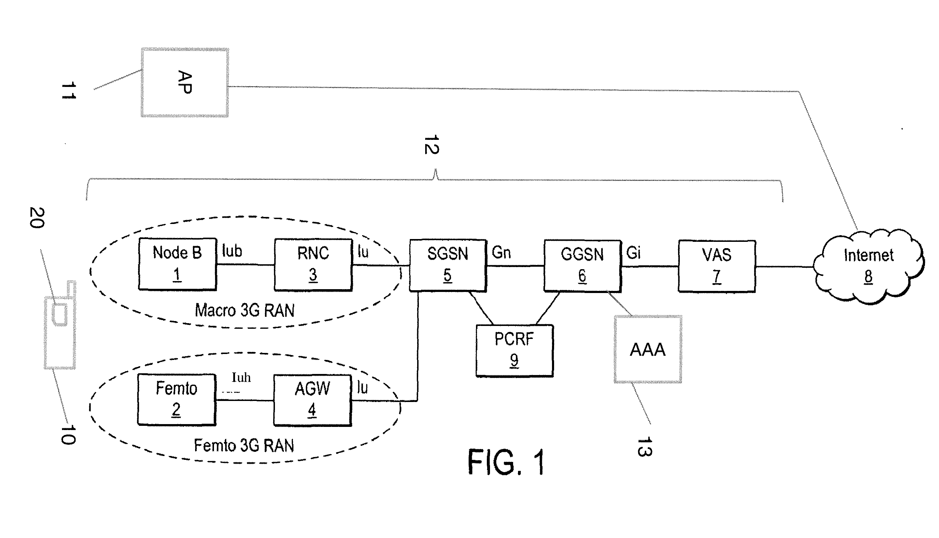

Key elements of a 3G mobile telecommunications network, and its operation, will now briefly be described with reference to Figure 1.

Each base station (e.g. Node B 1 and Femto 2) corresponds to a respective cell of the cellular or mobile telecommunications network 12 and receives calls from and transmits calls to a mobile terminal 10 in that cell by wireless radio communication in one or both of the circuit switched or packet switched domains.

The mobile terminal 10 may be any portable telecommunications device, including a handheld mobile telephone, a smartphone, a tablet computer, a personal digital assistant (PDA) or a laptop computer equipped with a network access datacard. The mobile terminal 10 can be considered to comprise two main parts: a radio frequency part (radio unit) and a baseband part. The radio frequency part handles the transmission of radio frequency signals between the antenna of the mobile terminal 10 and the nodeB 1 or Femto 2, and for converting radio frequency signals into digital baseband signals (and vice versa). The baseband part is responsible for controlling and managing the transmission of the baseband signals to other components of the mobile terminal 10.

The nodeB 1 or Femto 2 can be considered to comprise two main parts: a radio frequency part (radio unit) and a baseband part. The radio frequency part handles the transmission of radio frequency signals between the antenna of the nodeB 1 or Femto 2 and the mobile terminal 10, and for converting radio frequency signals into digital baseband signals (and vice versa). The baseband part is responsible for controlling and managing the transmission of the baseband signals to other components of the mobile telecommunications network.

In a macro 3G network, the Radio Access Network (RAN) comprises Node Bs and Radio Network Controllers (RNCs). The Node B is the function within the 3G network that provides the physical and transport radio link between the mobile terminal (User Equipment, UE) and the network. The Node B performs the transmission and reception of data wirelessly across the radio interface, and also applies the codes that are necessary to describe channels in a CDMA system. The RNC is responsible for control of the Node Bs that are connected to it. The RNC performs Radio Resource Management (RRM), some of the mobility management functions and is the point where encryption is done before user data is sent to and from a mobile terminal. The RNC connects to the Circuit Switched Core Network through a Media Gateway (MGW) and to an SGSN (Serving GPRS Support Node) 5 in the Packet Switched Core Network. In Figure 1, Node B 1 is controlled by RNC 3 across the lub interface. An RNC may control more than one Node B.

Figure 1 also illustrates a Femto 3G RAN, with Femto 2 operating as the base station. Femto 2 is connected to an Access Gateway (AGW) (a.k.a Concentrator) 4 via an luh interface. Femto is an abbreviation of "femto-cell", and many other different names have been used to refer to the same apparatus.

The radio link between the Femto 2 and the mobile terminal uses the same cellular telecommunication transport protocols as Node B 1 but with a smaller range - for example 25m. The Femto 2 appears to the mobile terminal 10 as a conventional base station, so no modification to the mobile terminal is required for it to operate with the Femto 2. The Femto 2 performs a role corresponding to that of Node B 1 in the macro 3G RAN.

The Femto 2 may be configured to serve a Wireless Local Area Network (WLAN) located in a home or office, in addition to GSM/UMTS/LTE networks. The WLAN could belong to the subscriber of the mobile terminal, or be an independently operated WLAN. The owner of Femto 2 can prescribe whether it is open or closed, whereby an open femto is able to carry communications from any mobile device in the GSM/UMTS/LTE network, and a closed femto is only able to carry communications from specific pre-assigned mobile devices.

Conventionally, in a 3G network (macro or Femto), the RANs are controlled by a mobile switching centre (MSC), not shown, and an SGSN (Serving GPRS Support Node) 5 of the core network. The MSC supports communications in the circuit switched domain, whilst the SGSN 5 supports communications in the packet switched domain - such as GPRS data transmissions. The SGSN 5 is responsible for the delivery of data packets from and to the mobile terminals within its geographical service area. It performs packet routing and transfer, mobility management (attach/detach and location management), logical link management, and authentication and charging functions. A location register of the SGSN 5 stores location information (e.g., current cell, current VLR) and user profiles (e.g., IMSI, address(es) used in the packet data network) of all mobile terminals registered with this SGSN.

Communications between the AGW 4 and the SGSN 5 are preferably IP based communications, and may be, for example, transmitted over a broadband IP network. Further, the connection between the Femto and the AGW 4 may use the PSTN (Public Switched Telephone Network). Typically a DSL cable connects the AGW 4 to the PSTN, and data is transmitted therebetween by IP transport/DSL transport. The Femto 2 or AGW 4 converts the cellular telecommunications transport protocols used between the mobile terminal 10 and the Femto 2 to the appropriate IP based signalling.

The femto 2 may be connected to the AGW 4 by means other than a DSL cable and the PSTN network. For example, the femto 2 may be connected to the AGW 4 by a dedicated cable connection that is independent of the PSTN, or by a satellite connection.

The SGSN 5 is in communication with the GGSN 6 (Gateway GPRS Support Node) across the Gn interface. The GGSN is responsible for the interworking between the GPRS network and external packet switched networks, e.g. the Internet. The GGSN enables the mobility of mobile terminals in the networks. It maintains routing necessary to tunnel the Protocol Data Units (PDUs) to the SGSN 5 that service a particular mobile terminal. The GGSN 6 converts the GPRS packets coming from the SGSN 5 into the appropriate packet data protocol (PDP) format (e.g., IP or X.25) and sends them out on the corresponding packet data network. In the other direction, PDP addresses of incoming data packets are converted to the mobile network address of the destination user. The readdressed packets are sent to the responsible SGSN 5. For this purpose, the GGSN 6 stores the current SGSN 5 address of the user and their profile in its location register. The GGSN 6 is responsible for IP address assignment and is the default router for the connected mobile terminal. The GGSN 6 also performs authentication and charging functions. The authentication is performed with reference to Authentication, Authorization and Accounting (AAA) server 13. Other functions include IP Pool management and address mapping, QoS and PDP context enforcement.

In turn the GGSN 6 may route data via any applicable Value Added Service (VAS) equipment 7, before data is forwarded towards its intended destination via the Internet 8. As an example of the functionality of the VAS equipment, the traffic may be inspected for adult content before reaching the end-user if this user is under 18 years of age or has opted for adult content filtering.

A PCRF (Policy and Charging Rules Function) apparatus 9 is also provided, in communication with both the SGSN 5 and the GGSN 6. The PCRF 9 provides billing and charging policy functions. The PCRF 9 may also store the preferences for adult content filtering for each subscriber.

The SGSN 5, GGSN 6, VAS 7, PCRF apparatus 9 and AAA 13 comprise the core network of the mobile telecommunications network 12.

Additionally a WLAN access point (AP) 11 may be provided to enable the mobile terminal 10 (with WLAN communication capability) to access the internet 8 independently of the mobile telecommunications network 12 (including the core thereof). The WLAN communications may be in accordance with a relevant Standard, such as IEEE 802.11. The access point 11 may be controlled by a service provider that is physically, technically and/or legally separate from the mobile telecommunications network.

Traffic in a mobile telecommunications network can be considered to be separated into "control plane" signalling and "user plane signalling". The control plane performs the required signalling, and includes the relevant application protocol and signalling bearer, for transporting the application protocol messages. Among other things, the application protocol is used for setting up the radio access bearer and the radio network layer. The user plane transmits data traffic and includes data streams and data bearers for the data streams. The data streams are characterised by one or more frame protocols specific for a particular interface. Generally speaking, the user plane carries data for use by a receiving terminal - such as data that allow a voice or picture to be reproduced - and the control plane controls how data are transmitted.

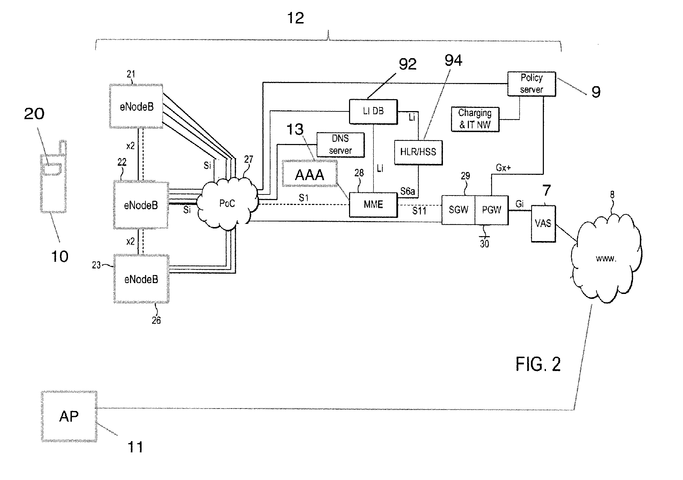

Figure 2 shows a high level description of the architecture of a LTE/SAE (4G) macro network.

The LTE/SAE network 12 includes eNode Bs 21,22,23 which make up the RAN. The eNode Bs effectively combine the functionality of the node B and the RNC of the 3G network. These eNodeBs are the network components which communicate with the mobile communication devices (e.g. 10). The eNodeBs are arranged in groups and each group controlled by a Mobility Management Entity (MME) 28 and a User Plane Entity (UPE), not shown.

The MME 28 performs many of the mobility functions traditionally provided by the 3G SGSN. The MME 28 terminates the control plane with the mobile device 10. It is responsible for terminating NAS (Non Access Stratum) Signalling such as MM (Mobility Management) and SM (Session Management) information as well as coordinating Idle Mode procedures. Other responsibilities of the MME include gateway selection inter MME 28 Mobility and authentication of the mobile device. The authentication is performed with reference to Authentication Authorization and Accounting (AAA) server 13.

The UPE manages protocols on the user plane such as, storing mobile terminal contexts, terminating the Idle Mode on the user plane, and PDP context encryption.

Each of the eNodeBs 21,22, 23 is connected to the mobile network core through a Point of Concentration (PoC) 27. All traffic from the eNodeBs 21, 22, 23 which is to be routed through the core mobile network is routed to the PoC 27. This includes both user plane and control plane data. On the control plane level, the PoC 27 routes data to and from the Mobility Management Entity (MME) 28 across the S1 interface. Control data is also sent to and from other core network components, including the Lawful Interceptor Database (LI DB) 92, DNS Server, Policy Server (including Charging rules and IT Network) 9 and Home Location Register/Home Subscriber Server (HLR/HSS) 94 (which contains subscriber and device profile and state information). The Policy Server 9 provides billing and charging policy functions. The Policy Server 9 may also store the preferences for adult content filtering for each subscriber.

User plane data, on the other hand, is transmitted by the PoC 27 to the Serving GateWay (SGW) 29 and then to the Packet data network GateWay (PGW) 30. The SGW and PGW are typically separate entities, with the SGW being a data plane element whose primary function is to manage user-plane mobility and data being transferred between the eNodeBs and the PDN Gateway (PGW). From the PGW, data is routed across a Value Added Service (VAS) node 7 to the Internet 8. In LTE/SAE this is the standard data path from the mobile terminals to the Internet. As an example of the functionality of the VAS equipment 7, the traffic may be inspected for adult content before reaching the end-user if this user is under 18 years of age or has opted for adult content filtering.

Additionally a WLAN access point (AP) 11 may be provided to enable the mobile terminal 10 (with WLAN communication capability) to access the internet 8 independently of the mobile telecommunications network 12 (including the core thereof). The WLAN communications may be in accordance with a relevant Standard, such as IEEE 802.11. The access point 11 may be controlled by a service provider that is physically, technically and/or legally separate from the mobile telecommunications network.

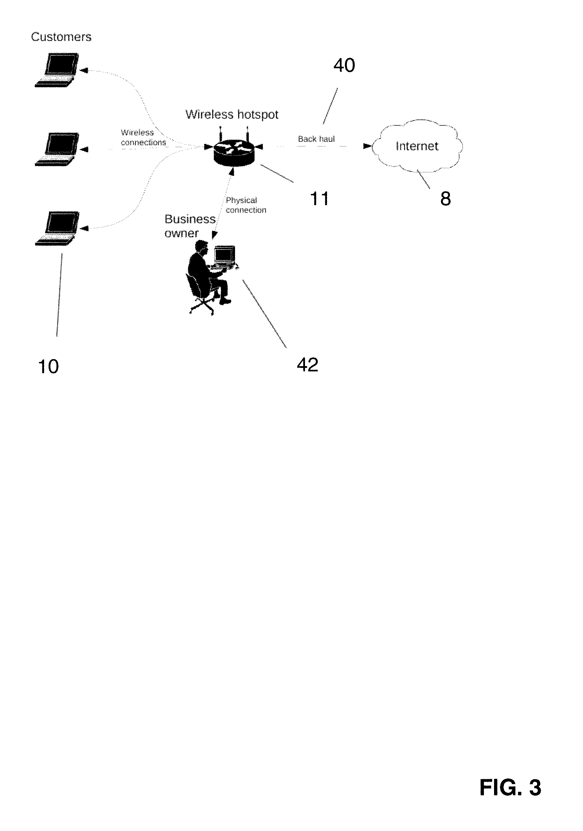

Figure 3 shows an access point 11 in accordance with an embodiment of the invention which is operable to communicate with user devices 10. Typically, the user devices 10 are portable devices, such as mobile telecommunications devices, tablet computers or laptop computers. Communications between the devices 10 and the access point 11 may be wireless communications in accordance with a standard such as IEEE 802.11. The communications may also be in accordance with 3G or 4G Standards (in a similar manner to the femto 2, NodeB 1 or eNode B 21, 22, 23 of Figures 1 and 2). The access point 11 is connected to a data network such as the Internet 8 via a backhaul connection 40. The backhaul connection 40 may include a fixed (wired) connection or may include a wireless connection, for example in accordance with the 3G or 4G Standards. The backhaul connection (40) may include a cellular telecommunications network core (e.g., like the backhaul connection of the femto 2). An access point administrator 42 comprises a data processing device, such as a personal computer (PC), which the access point owner/manager uses to interact with the access point 11. The administrator 42 will typically be operated by the business owner or manager responsible for the premises within which the access point provides coverage.

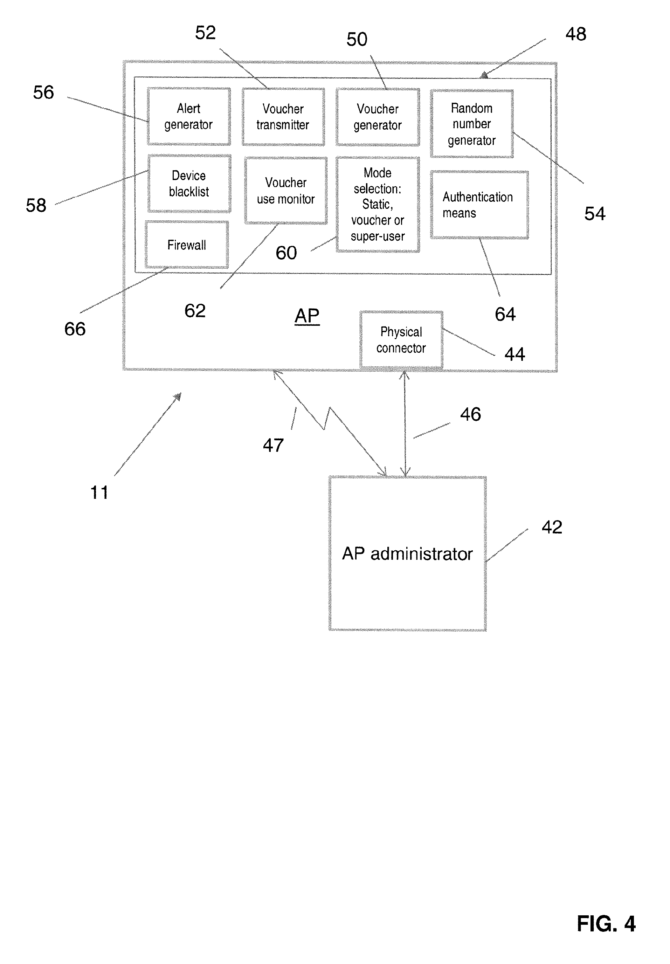

Figure 4 shows the access point 11 and administrator 42 in more detail. The access point 11 includes interface means such as a physical connector 44 for allowing a wired (cable) connection with the administrator 42. The physical connector 44 may comprise a USB port, and Ethernet port, or any other suitable connector for allowing data communication. A wire (cable) 46 may extend between the physical connector 44 at the administrator 42. The administrator 42 may also communicate with the access point 11 by a wireless connection 47 or via an indirect connection (not shown), that allows data to be transmitted by, e.g. email, SMS or instant messaging).

The access point 11 hosts an application 48 which implements various functional modules, including a voucher generator 50, a voucher transmitter 52, a random number generator 54, an alert generator 56, a device blacklist module 58, a mode selection module 60 (operable to select a "static" or "voucher" mode of the access point 11), a voucher use monitor 62, authentication means 64 and firewall 66. Authentication of users is performed by the application 48 (by the authentication means 64) itself which provides both the opportunity for branding and confirming the acceptance of the terms and conditions required for use of the service.

The mode selection function 60 allows the access point 11 to be operated in either a static mode or a (dynamic) voucher mode. In the static mode the application 48 is responsive to a single static mode code, which can be used by any number of mobile device 10 users to provide access to the Internet 8 (or other data network). In the voucher mode, a one-time use code is generated for each user device 10 access to the Internet 8. The voucher codes cannot be reused.

When in the static mode the static mode code may be automatically generated periodically by the mode selection function 60 and sent in a message to the owner via the administrator 42. The static mode code may be set by the owner and sent by the administrator 42 to the mode selection function 60. The static mode code may be (e.g.) a single mnemonic word or sequence of digits.

This embodiment enables the management of branding, vouchers and sessions at the access point 11 itself. This can then be managed by the owner or manager of the premises or business in which the access point 11 is located, by the administrator 42, giving full control over session cost, duration, data volume and branded experience.

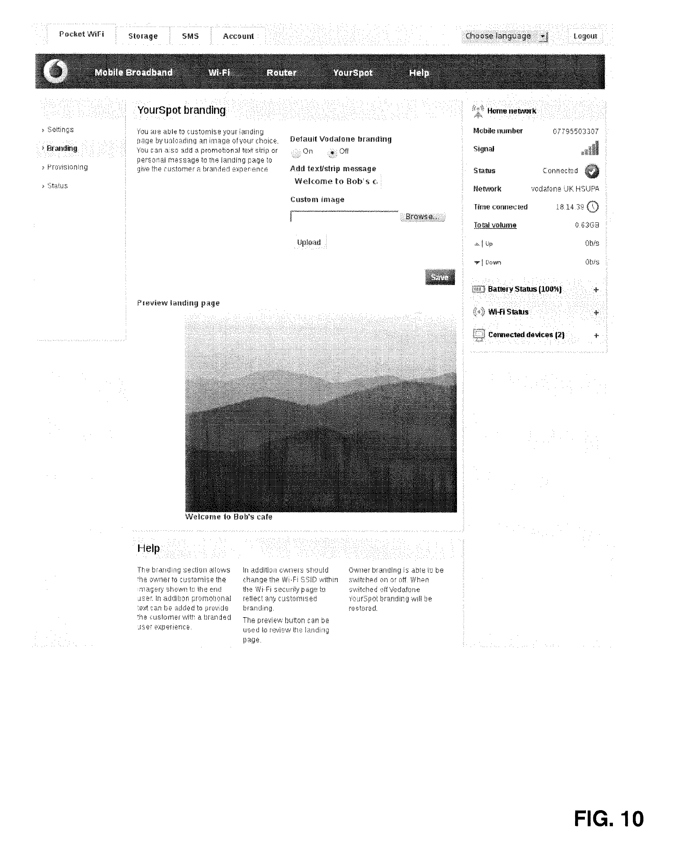

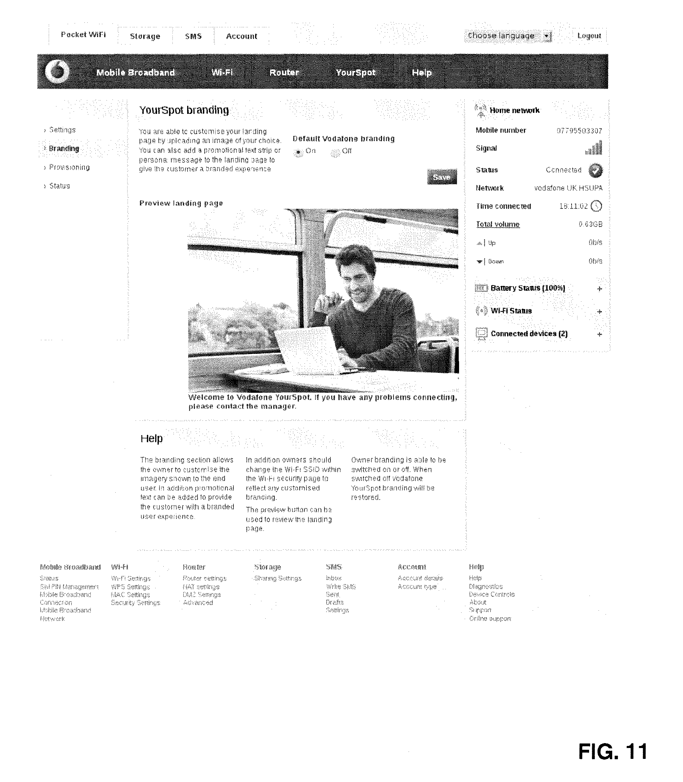

The owner/manager may customise the landing page using simple tools in the administration user interface, displayed at the administrator 42, so that the customer sees the business' branding image and some text, as shown in Figures 10 and 11. This imagery may carry offers or other promotions and can be changed at will without interruption to the service.

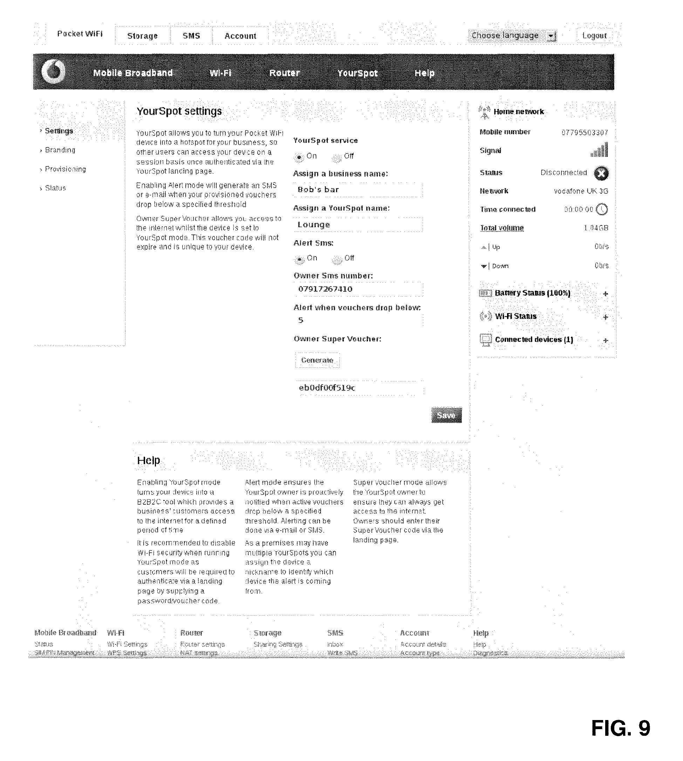

The application 48 may be enabled or disabled in response to an instruction from the administrator 42, returning the device to normal personal hotspot functionality as necessary. This can be done by the administration user interface, as shown in Figure 9.

The owner/manager can choose how to operate the Internet service in one of two modes, providing access in response to a voucher or static code. The mode may be selected in response to an instruction from the administrator 42 to the mode selection module 60.

The application 48 may also be responsive to a super user code which will allows unfettered access to the Internet 8 in either mode over the wireless network. The super user code may be set by the administration user interface, as shown in Figure 9, or may be generated automatically by the voucher generator 50 and the random number generator 48, in response to a request from the administrator 42. The super user code may be set (and used) when in either the dynamic or static mode. The super user code is an override code that exists so that the owner or staff may use the access point 11 without buying vouchers or repeatedly entering a static or dynamic code. The Super User code is there mostly as a convenience for owners, but also so that owner usage does not have to be accounted for within voucher sales etc.

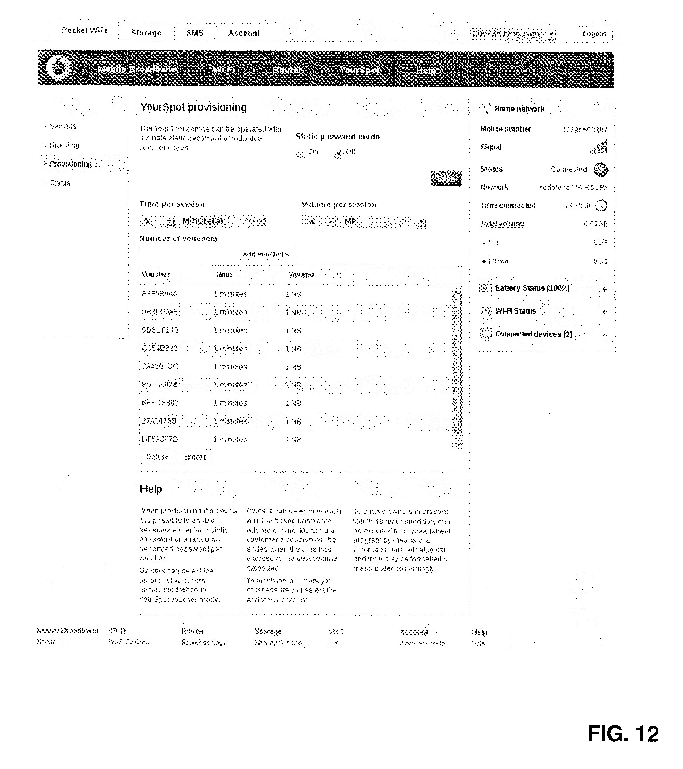

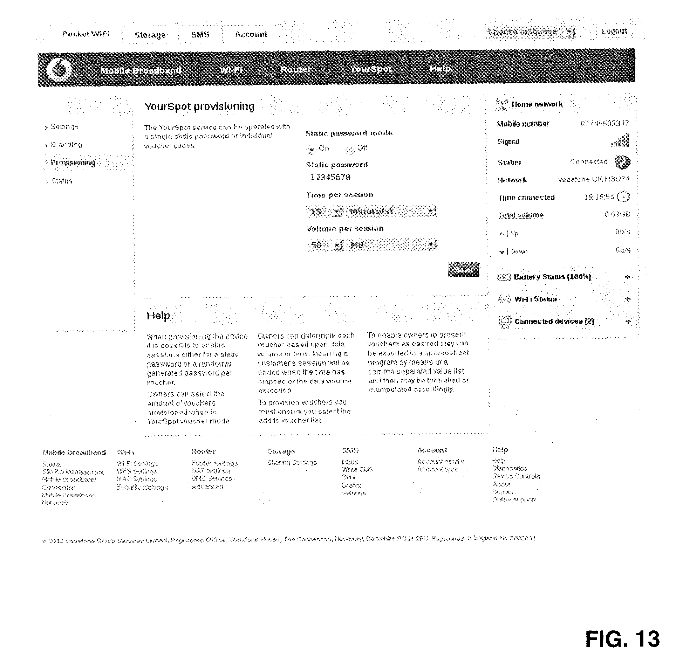

If the access point 11 is in static mode the owner may define a suitable code for use by the customers. This can be changed easily, allowing, for instance, the code to be changed every day. The static code value may be set by the owner, using the administrator 42 and the administration user interface, as shown in Figure 15. The status code value is then communicated to the application 48, e.g. via the connection 46 or 47. The authentication means 64 is then updated to only allow authentication of static codes which correspond to the newly set value. In an alternative arrangement, the owner may simply request that a new static code is used. This request is sent from the administrator 42 to the application 48, which then generates a suitable new static code value, using the random number generator 54, and communicates this to the authentication means 64 - which then only allows authentication of static codes which correspond to the newly generated value. The value is also sent to the owner in a message to the administrator 42. The application 48 may automatically generate a new static code value at pre-set intervals and send the owner a message to the administrator 42 indicating the current code value. This allows the owner to rotate the code with little effort and thwart potential overuse of any free service. The owner may enable the static mode and set the time and/or data volume limits for each session by the administration user interface, as shown in Figures 12 and 13. The current code may be advertised at the premises together with the SSID of the access point 11.

As mentioned above, the maximum duration of a single communication session of a user device 10 with the access point 42 may be set by the administrator 11, as shown in Figures 12 and 13. The maximum data quantity downloaded and/or uploaded in a single communication session of a user device 10 with the access point 11 may be set by the administrator 42, as shown in Figures 12 and 13. The duration/data consumption of a communication session by each device is monitored by the application 48. When the duration/data quantity limit is reached, the application 48 ends the communication session, and advises the device user. The application may allow the device user to start a new communication session with the access point using the same static code. Whilst starting the new communication session, the user again is exposed to the owner's chosen branding.

If the access point 11 is in voucher mode then the owner can provision new vouchers in batches having specified the duration and/or volume to be applied to each. That is, the owner specifies, via the administrator 42, the number of vouchers, the time period for which the voucher provides access to the Internet 8 and/or the data volume that may be downloaded/uploaded from/to the Internet 8. This is communicated to the application 48, whereupon the voucher generator 50 generates the vouchers, using the random number generator 54. The voucher transmitter 52 may then export the vouchers to the administrator 42. The vouchers may be exported in a file format (e.g. csv). The application 48 may send a message to the administrator 42 containing the newly provisioned vouchers. The owner may then distribute the vouchers by any suitable means. For example, the vouchers may be printed onto the paper and handed to users. The vouchers may be sent to the users electronically by email or SMS message. The application maintains a record of the time and data limits associated with each voucher.

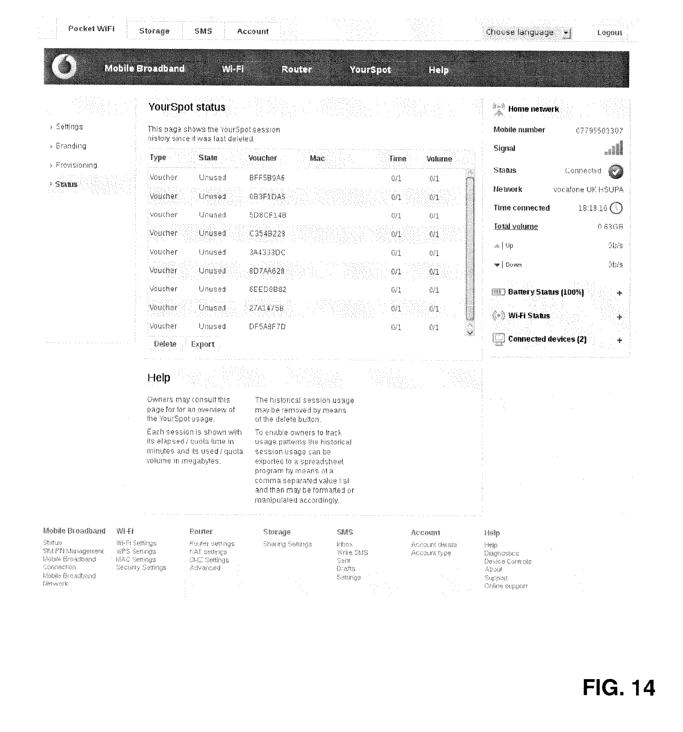

When the distributed vouchers are used by users this is recorded by the voucher use monitor 62. The status may be displayed on the administrator 42, as shown in Figure 14. The number of vouchers used may be compared to the number of vouchers generated to determine the number of unused vouchers. A threshold may be set by the voucher use monitor 62 when the number of unused vouchers reaches a predetermined level.

In voucher mode the owner, via the administrator 42, can request an alert message to indicate that the access point 11 is running low of unused vouchers. The alert request is received by the voucher use monitor 62. When the unused voucher threshold is reached the voucher use monitor 62 instructs the alert generator 56 to issue an alert to the owner via the administrator 42. The alert may be sent via the cable connection 46 or wirelessly via the wireless link 47. The alert may be sent by SMS or email. As premises may have multiple access points 11 the owner can assign each access point 11 a nickname to identify which device the alert is coming from.

In voucher mode an enhancement is to have the application 48 automatically generate new vouchers as required (e.g. in dependence of the unused voucher threshold) and have them sent in a message to the owner, via the voucher transmitter 52 and administrator 42.

The access point 11 keeps a historical record of each user session so that the owner can ensure any data or financial limits are not being breached, and also provide indications as to whom might be responsible for any legal wrongdoing that may occur whilst a customer uses the service. This data may be stored in a table to be described below. An enhancement is for the application 48 to send the owner a message to the owner via the administrator 42 if the application 48 detects excessive usage or other patterns of use the owner might wish to prevent.

A further enhancement is for the owner, via the administrator 42, to be able to blacklist and ban or otherwise reduce usage of certain customer devices, for example a persistent over-user of the service. The device blacklist 58 compares device identifiers (e.g. MAC addresses) with a list of problem devices as part of the authentication process performed by the authentication means 64. If the device is on the list, authentication may be denied, or the data session may be modified - e.g. to limit the speed or amount of data that can be sent/received.

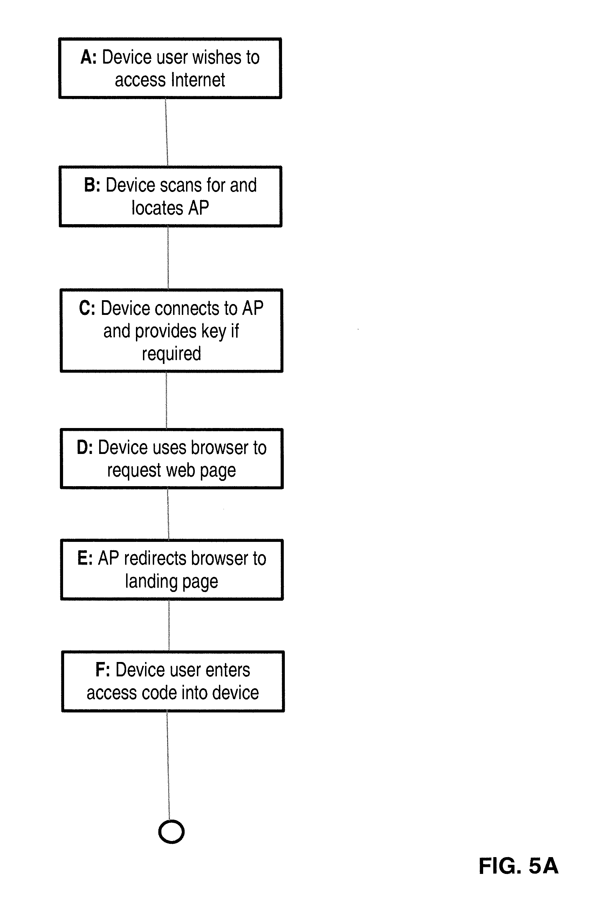

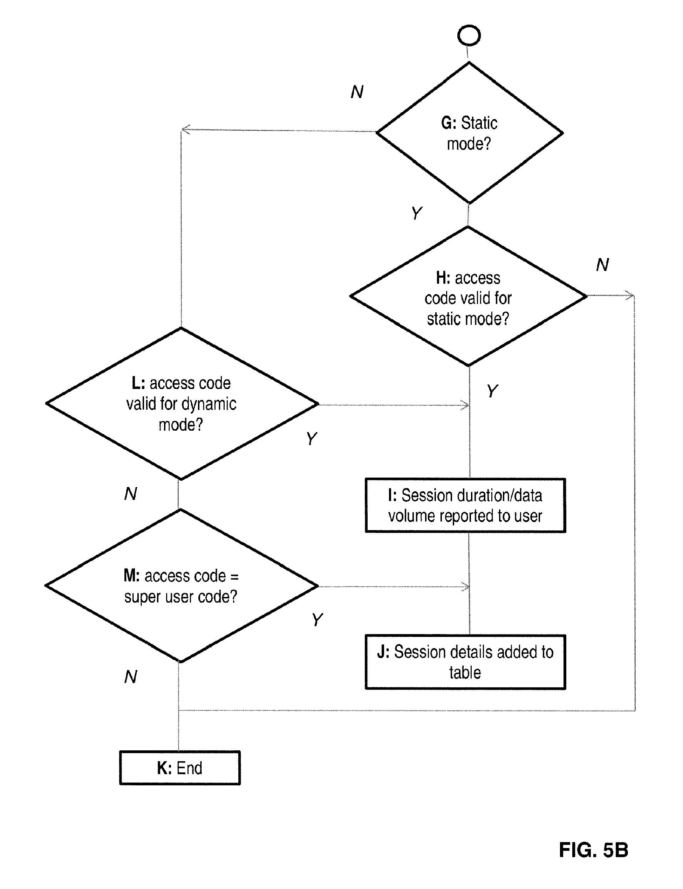

The steps performed when a device 10 wishes to access the internet 8 will now be described in relation to the flowchart of Figures 5A and 5B.

At step A the device 10 user wishes to access the internet 8.

At step B the device 10 scans for available wireless networks and identifies the access point 11.

The access point 11 may be an "open" access point which does not perform any encryption of data transmissions (and which therefore does not require a security pass key to communicate through the access point). This is considered to be an advantageous arrangement for the present embodiment as it is desirable for the device 10 user to make an initial connection to the access point 11 without impediment, with access to the Internet 8 being controlled by subsequent authentication procedures. However, alternatively, data communication between the device 10 and the access point 11 may be encrypted, but preferably this should be with a well-known pass key, with the SSID also being well-known. Owners may change the Wi-Fi SSID within a Wi-Fi security page to reflect any customised branding.

At **step C** the device 10 connects to the access point 11. If the access point 11 is open, this connection can happen automatically without any user action required. On the other hand, the access point is secured, then it may be necessary for the user to enter the appropriate pass key (which is preferably a well-known, or advertised pass key). It is advantageous to ensure that the user can make the initial network connection to the access point 11 in an easy manner. It is for that reason it is suggested that the usual Wi-Fi authentication mechanisms should be either disabled completely i.e. open, or use a simple and well known key and SSID.

At **step D** The user of the device 10 then operates an appropriate web browser to request a web page of their choice in the conventional manner.

At **step E** the application 48 determines that this is a new user connection. The firewall 66 identifies the MAC address of the device 10, and compares the MAC address to a list of approved MAC addresses (which may be empty initially). If the device's MAC address is not in the approved list, the firewall 66 redirects the device's web traffic to the login landing page, and blocks all other traffic.

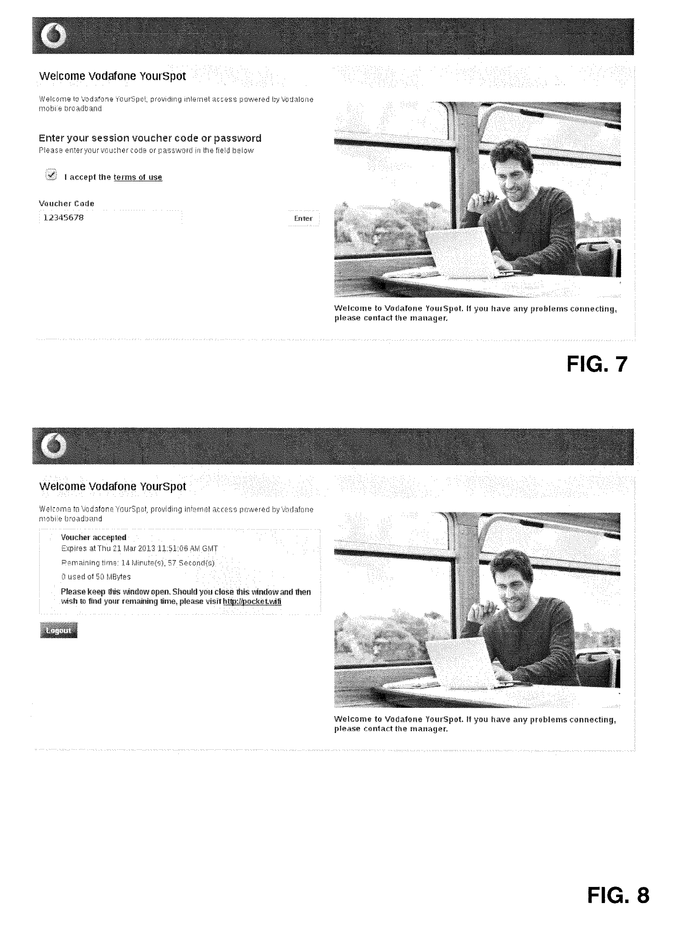

This landing page may be customised by the owner of the device to include wording and imagery (branding) that promotes the business. The landing page may, for example, have the appearance of that shown in Figure 7, and prompts the device 10 user to enter a voucher (access) code at step F. The code may be entered using the keyboard or touch screen of the device 10, for example.

At **step G** it is determined if the mode selection function 60 is in the static voucher mode.

If at **step G** it is determined that the mode selection function 60 is in the static voucher mode, then at **step H** it is determined at the application 48 whether the access code entered at step F is valid as a static access code. This is performed by the authentication means 64 comparing the code to the current static access code (e.g. generated by the voucher generator 50 or set manually by an administrator 42).

If it is determined at step H that the access code is valid as a static access code, then the communication session between the device 10 and the Internet 8 commences. The firewall 66 adds the MAC address of the device 10 to the list of approved MAC addresses. While the device's MAC address is in the approved list, the firewall 66 allows the device 10 to pass traffic through the access point 11 without impediment (with no re-direction to the landing page).

At **step I** the user of the device 10 may be presented with a web page that shows the duration and/or data volume that have been used in the session, and this page may have the appearance of that shown in Figure 8. The user may bookmark this page so that he can return to check usage at any time during his session.

At **step J** the application 48 commences monitoring of the communication session.

If it is determined at step H that the access code is invalid as a static access code, then the process ends at **step K**, and no communication session with the Internet 8 is enabled.

If at **step** G it is determined that the mode selection function 60 is not in the static voucher mode, then at **step L** it is determined at the application 48 whether the access code entered at step F is valid as a dynamic access code. This is performed by the authentication means 64 comparing the code to the unused dynamic access codes (e.g. generated by the voucher generator 50).

If it is determined at step L that the access code is valid as a dynamic access code, then the communication session between the device 10 and the Internet 8 commences. The firewall 66 adds the MAC address of the device 10 to the list of approved MAC addresses. While the device's MAC address is in the approved list, the firewall 66 allows the device 10 to pass traffic through the access point 11 without impediment (with no re-direction to the landing page). Steps I and J are then performed. The access code is then recorded by the application as a used access code, and so cannot be used subsequently to start a new session.

On the other hand, if it is determined at step L that the access code is not valid as a dynamic access code, then at **step M** it is determined at the application 48 whether the access code entered at step F is valid as a super user access code. This is performed by the authentication means 64 comparing the code to the super user access code (e.g. generated by the voucher generator 50 or set manually by an administrator).

If it is determined at step M that the access code is valid as a super user access code, then the communication session between the device 10 and the Internet 8 commences. The firewall 66 adds the MAC address of the device 10 to the list of approved MAC addresses. While the device's MAC address is in the approved list, the firewall 66 allows the device 10 to pass traffic through the access point 11 without impediment (with no re-direction to the landing page). Step J is then performed. The application 48 recognises that the access code is the super user code and allows the user unlimited access to the Internet 8.

If it is determined at step M that the access code is invalid as a super user access code, then the process ends at **step K**, and no communication session with the Internet 8 is enabled.

During a communication session the device 10 is identified, for example, by means of its MAC address. The application may record details of all live and expired communication sessions in a session table, such as shown in table 1 below.

**Table 1: Session Table**

| **SESSION TABLE** | | | | | |
|---|---|---|---|---|---|
| **Session entity** | **Time since start** | **Data volume used** | **Client device identifier** | **Websites visited** | **Session status** |
| 1 | 10 | 1KB | 1234 | www.xxx | Live |
| 2 | 23 | 100KB | 5678 | www.xyy | Expired |
| 3 | 5 | 453KB | 2546 | www.xzz | Live |
| ... | | | | | |
| ... | | | | | |
| n | 52 | 150KB | 1454 | www.xyz | Live |

The session table may include a session entity identifier, which gives each session a unique identity. For each session, the time since the start of the session is recorded, for example, by means of a timer implemented by the application 48. Also recorded in the session table for each session is the data volume used. The client device identified (for example the MAC address, as mentioned above) is also recorded. Finally, the session table records for each session whether the session is a live session or an expired session.

Optionally, the websites visited in the communication session may be recorded (for example by a Transparent proxy server, by Packet sniffing or by DNS logging). The application 48 may block access to particular websites, such as those of competitors or websites that contain unsuitable material (such as "adult" content).

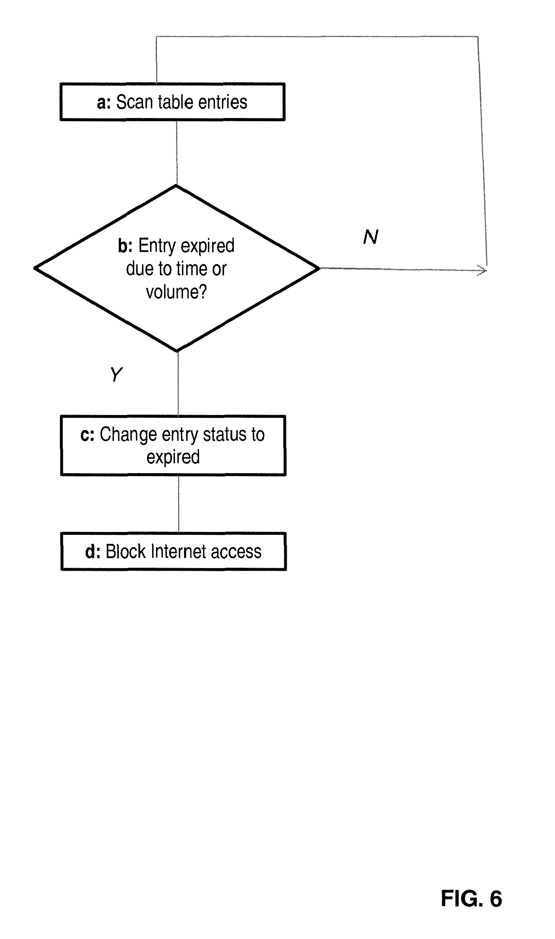

As shown in the flow chart of Figure 6, periodically the table of session entities is scanned by the application 48 at **step a.** The time and data information in the table is compared to the maximum time and data quantity values (if any) for that communication session at **step b.** When either of the maxima are reached the communication session is ended, and the relevant table entity has its state changed to "expired" at **step c** and the corresponding Internet access removed at **step d.** The device's MAC address is removed from the list of approved MAC addresses. When the device's MAC address is not in the approved list, the firewall 66 redirects the device's web traffic to the login landing page, and blocks all other traffic. In this regard, it should be appreciated that different vouchers may have different durations and/or data quantity values (maxima) associated therewith (e.g. a user may pay for a voucher providing greater duration or data quantity). The process of Figure 6 enforces the relevant duration and/or data criteria for each voucher.

This session information is retained for financial or legal reasons and may be exported to an external medium for data retention purposes. The history may be purged from the application to conserve storage space as is necessary.

After expiry of a session, further attempts to access the Internet will result in the user being redirected to the log on page again. In the static mode the same code may be used again immediately to gain internet access, the rationale being to ensure that periodically the user views the branding set by the owner. The user may end his session at any point by pressing a Log Out button.

In the embodiments described, the communication sessions are made available to user devices without charge. The owner may make charge a fee for communication session use, for example by charging users for a dynamic voucher.

The access point may allow the use of static codes and dynamic vouchers at the same time.

As an alternative to the device 10 user manually entering the access code, this process may be automated. For example, a device 10 user may access the landing page and submit payment using credit card, Loyalty card, prepayment card, Oyster card or paypal etc. Once the payment has been received, the access point 11 may allow him access automatically. The access point 11 may send a command to the user device 10 (e.g. by SMS), this command entering directly the code into the appropriate section on the landing page, so that the user only needs to pay for the voucher, whilst at the same time still gets the landing page in front of him. The access point may be made aware of the user device 10 MSISDN for the delivery of the command as part of the initial communication with the access point 11.

### ADDITIONAL CLAUSES

The following are additional clauses relative to the present invention and disclosure, which could be combined and/or otherwise integrated in any of the aspects described above or in the claims below.
Clause 1. An access point (11) for enabling a user device (10) to access a data network (8), the access point (11) being operable to wirelessly communicate with the user device (10) and for providing data network (8) access for the device (10) when authenticated, wherein the access point (11) includes authentication means (64), and processing means (48) for providing an authentication code for transmission to the user device (10) to enable the user device (10) to be authenticated for a communication session with the access point (11) by the authentication means.
Clause 2. The access point (11) of clause 1, wherein the access point (11) is a (unitary) module.
Clause 3. The access point (11) of clause 1 or 2, wherein the access point (11) is connected to the data network (8) by a fixed or wireless link, such as a cellular telecommunications network.
Clause 4. The access point (11) of clause 1, 2 or 3, wherein the access point includes means for determining when the authentication code expires and for interrupting the data network access in dependence thereon.
Clause 5. The access point (11) of clause 1, 2, 3 or 4, wherein the authentication code is provided to the user device (10) by a printed medium or sent by a wireless communication method, such as SMS.
Clause 6. The access point (11) of any one of clauses 1 to 5, wherein the processing means (48) is operable to generate an authentication code of a first type to authenticate the mobile device (10) with the access point (11) for a predetermined number of times, for example only once.
Clause 7. The access point (11) of any one of clauses 1 to 6, wherein the processing means (48) is operable to set an authentication code of a second type usable to authenticate the mobile device (10) with the access point (11) until a predetermined time.
Clause 8. The access point (11) of any one of clauses 1 to 7, including means for monitoring the data network (8) access of the user device that is associated with the authentication code.
Clause 9. The access point (11) of any one of clauses 1 to 8, including means for receiving a parameter relating to an authentication code and for adjusting a characteristic of the communication session associated with the authentication code.
Clause 10. The access point (11) of any one of clauses 1 to 9, wherein the processing means (48) is operable to monitor the use of the authentication codes and for generating alerts in dependence thereon.
Clause 11. The access point (11) of any one of clauses 1 to 10, including interface means (44) operable to detect the physical coupling of an administrator entity therewith and to only allow the administrator entity to communicate with the processing means (48) when the physical coupling is detected.
Clause 12. A system including the access point (11) of any one of clauses 1 to 11, and administrator means (42) operable to be coupled to the access point (11) to control generation of the authentication codes and/or a characteristic of the communication session associated with the authentication code.
Clause 13. The system of clause 12, wherein the access point (11) and the administrator means (42) are configured for physical coupling, the access point (10) being operable to detect the physical coupling.
Clause 14. The system of clause 12 or 13, wherein the access point (11) is operable to transmit to the administrator means (42) data relating to the communication session associated with each of the authentication codes, to facilitate monitoring of the communication sessions.
Clause 15. A method of operating an access point (11) for enabling a user device (10) to access a data network (8), the access point (11) being operable to wirelessly communicate with the user device (10) and for providing data network (8) access for the device (10) when authenticated, wherein the access point (11) includes authentication means (64), and processing means (48), the method including operating the processing means (48) to provide an authentication code for transmission to the user device (10); and operating the authentication means (64) to receive the authentication code from the user device (10) and enabling access to the data network (8) in dependence thereon.
Clause 16. An access point (11) for enabling a user device (10) to access a data network (8), including means operable to wirelessly communicate with the user device (10) by a first communication type; means operable to communicate with the data network (8) by a second communication type; and interface means (44) operable to detect the physical coupling of an administrator entity therewith and to only allow the administrator entity to communicate with the access point (11) when the physical coupling is detected.
Clause 17. The access point (11) of clause 16, wherein the access point (11) is a (unitary) module.
Clause 18. The access point (11) of clause 16 or 17, wherein the access point (11) is connected to the data network (8) for communication by the second communication type by a fixed or wireless link, such as a cellular telecommunications network.
Clause 19. The access point (11) of clause 16, 17 or 18, wherein the access point (11) includes authentication means (64), and processing means (48) for generating an authentication code for transmission to the user device (10) to enable the user device (10) to be authenticated for a communication session with the access point (11) by the authentication means.
Clause 20. The access point (11) of clause 19, wherein the access point includes means for determining when the authentication code expires and for interrupting the data network access in dependence thereon.
Clause 21. The access point (11) of clause 19 or 20, wherein the authentication code is provided to the user device (10) by a printed medium or sent by a wireless communication method, such as SMS.
Clause 22. The access point (11) of any one of clauses 19, 20 or 21, wherein the processing means (48) is operable to generate an authentication code of a first type to authenticate the mobile device (10) with the access point (11) for a predetermined number of times, for example only once.
Clause 23. The access point (11) of any one of clauses 19 to 22, wherein the processing means (48) is operable to set an authentication code of a second type usable to authenticate the mobile device (10) with the access point (11) until a predetermined time.
Clause 24. The access point (11) of any one of clauses 19 to 23, including means for monitoring the data network (8) access of the user device that is associated with the authentication code.
Clause 25. The access point (11) of any one of clauses 19 to 24, including means for receiving a parameter relating to an authentication code and for adjusting a characteristic of the communication session associated with the authentication code.
Clause 26. The access point (11) of any one of clauses 19 to 25, wherein the processing means (48) is operable to monitor the use of the authentication codes and for generating alerts in dependence thereon.
Clause 27. An access point substantially as hereinbefore described with reference to and/or substantially as illustrated in any one of or any combination of the accompanying drawings.
Clause 28. A system substantially as hereinbefore described with reference to and/or substantially as illustrated in any one of or any combination of the accompanying drawings
Clause 29. A method of operating an access point, substantially as hereinbefore described with reference to and/or substantially as illustrated in any one of or any combination of the accompanying drawings

## Claims

1. An access point (11) for enabling a user device (10) to access a data network (8), the access point (11) being operable to wirelessly communicate with the user device (10) and for providing data network (8) access for the device (10) when authenticated, wherein the access point (11) includes authentication means (64), and processing means (48) for providing an authentication code for transmission to the user device (10) to enable the user device (10) to be authenticated for a communication session with the access point (11) by the authentication means.

2. The access point (11) of claim 1, wherein the access point (11) is a (unitary) module, and/or wherein the access point (11) is connected to the data network (8) by a fixed or wireless link, such as a cellular telecommunications network, and/or wherein the access point includes means for determining when the authentication code expires and for interrupting the data network access in dependence thereon.

3. The access point (11) of claim 1 or 2, wherein the authentication code is provided to the user device (10) by a printed medium or sent by a wireless communication method, such as SMS.

4. The access point (11) of any one of claims 1 to 3, wherein the processing means (48) is operable:
to generate an authentication code of a first type to authenticate the mobile device (10) with the access point (11) for a predetermined number of times, for example only once; and/or
to set an authentication code of a second type usable to authenticate the mobile device (10) with the access point (11) until a predetermined time.

5. The access point (11) of any one of claims 1 to 4, including means for monitoring the data network (8) access of the user device that is associated with the authentication code.

6. The access point (11) of any one of claims 1 to 5, including means for receiving a parameter relating to an authentication code and for adjusting a characteristic of the communication session associated with the authentication code.

7. The access point (11) of any one of claims 1 to 6, wherein the processing means (48) is operable to monitor the use of the authentication codes and for generating alerts in dependence thereon.

8. The access point (11) of any one of claims 1 to 7, including interface means (44) operable to detect the physical coupling of an administrator entity therewith and to only allow the administrator entity to communicate with the processing means (48) when the physical coupling is detected.

9. A system including the access point (11) of any one of claims 1 to 8, and administrator means (42) operable to be coupled to the access point (11) to control generation of the authentication codes and/or a characteristic of the communication session associated with the authentication code.

10. The system of claim 9, wherein the access point (11) and the administrator means (42) are configured for physical coupling, the access point (10) being operable to detect the physical coupling; and/or wherein the access point (11) is operable to transmit to the administrator means (42) data relating to the communication session associated with each of the authentication codes, to facilitate monitoring of the communication sessions.

11. An access point (11) for enabling a user device (10) to access a data network (8), including means operable to wirelessly communicate with the user device (10) by a first communication type; means operable to communicate with the data network (8) by a second communication type; and interface means (44) operable to detect the physical coupling of an administrator entity therewith and to only allow the administrator entity to communicate with the access point (11) when the physical coupling is detected.

12. The access point (11) of claim 11, wherein the access point (11) include:
authentication means (64), and processing means (48) for generating an authentication code for transmission to the user device (10) to enable the user device (10) to be authenticated for a communication session with the access point (11) by the authentication means; and/or
means for determining when the authentication code expires and for interrupting the data network access in dependence thereon.

13. The access point (11) of claim 12, wherein the authentication code is provided to the user device (10) by a printed medium or sent by a wireless communication method, such as SMS.

14. The access point (11) of any one of claims 12 to 13, including means for receiving a parameter relating to an authentication code and for adjusting a characteristic of the communication session associated with the authentication code.

15. The access point (11) of any one of claims 12 to 14, wherein the processing means (48) is operable to monitor the use of the authentication codes and for generating alerts in dependence thereon.
